Europäisches Patentamt

European Patent Office

Office européen des brevets

(19)

(11) Numéro de publication: **0 194 215**
**B1**

(12) **FASCICULE DE BREVET EUROPEEN**

(45) Date de publication du fascicule du brevet:
28.12.88

(51) Int. Cl.⁴: **E 04 G 7/30**

(21) Numéro de dépôt: **86420058.9**

(22) Date de dépôt: **20.02.86**

(54) **Noeud d'échafaudage ou de structure similaire et procédé d'assemblage.**

(30) Priorité: **27.02.85 FR 8503319**

(43) Date de publication de la demande:
**10.09.86 Bulletin 86/37**

(45) Mention de la délivrance du brevet:
**28.12.88 Bulletin 88/52**

(84) Etats contractants désignés:
**AT BE CH DE FR GB IT LI LU NL SE**

(56) Documents cités:
**DE-B- 1 280 535**
**FR-A- 2 288 199**
**FR-A- 2 453 254**
**GB-A- 1 204 327**

(73) Titulaire: **CEGEDUR SOCIETE DE TRANSFORMATION DE L'ALUMINIUM PECHINEY, 23, Rue Balzac, F-75008 Paris (FR)**

(72) Inventeur: **Bahloul, Kamel, 13, rue Traversière, F-92100 Boulogne (FR)**

(74) Mandataire: **Séraphin, Léon et al, PECHINEY 28, rue de Bonnel, F-69433 Lyon Cedex 3 (FR)**

ACTORUM AG

## Description

L'invention est relative à un nœud d'échafaudage ou de structure similaire permettant la liaison de montants verticaux avec des barres et/ou traverses horizontales; ce nœud peut également servir d'élément de liaison entre les montants et les barres obliques de contreventement de l'échafaudage.

Dans les réalisations actuelles, un nœud d'échafaudage comprend en général une pièce ajourée en forme d'étoile fixée au montant vertical et une chape fixée à l'extrémité des barres et/ou traverses horizontales, l'ensemble étant lié par une clavette en forme de coin. Ces nœuds exigent donc 3 pièces de formes différentes.

Par ailleurs, lorsque l'échafaudage présente, vu en plan, des parties angulaires (autre que 0 ou 90°), les chapes de forme spécifique sont, dans ce cas, nécessaires.

Le problème que se propose de résoudre l'invention est donc la simplification de ces nœuds d'échafaudage en réduisant à 2 le nombre de pièces nécessaires à la liaison mécanique des montants verticaux et barres ou traverses horizontales, une modification mineure de la forme de l'une des pièces permettant, en outre, d'effectuer des liaisons angulaires obliques (en plan).

On connait également par le brevet allemand DE-B-1.280.535, un dispositif d'accrochage d'une pièce 17 comportant 2 bras, à l'extrémité desquels se trouvent 2 ouvertures dont le fond présente une ouverture carrée 25 et dans lesquelles s'engage un crochet 12 de forme latérale soit conique 14 soit conique et prismatique 30–31. Cependant, dans ce dispositif, la portée des crochets sur l'ouverture est limitée à une ligne circonférentielle 24 et éventuellement une petite surface prismatique 27.

Pour faciliter, la description, les pièces seront supposées être en position d'utilisation et les montants, barres et traverses seront supposés être des tubes cylindriques. Cependant des tubes présentant d'autres sections droites (carrée, polygonale, rectangulaire, etc...) peuvent être·utilisés en modifiant les formes correspondantes décrites.

Selon l'invention, le nœud comprend donc:
– und pièce étoilée, munie en son centre d'une ouverture circulaire, d'axe vertical, et portant à l'extrémité de chacun de ses bras une ouverture pyramido-conique, dont l'axe est parallèle à celui de l'ouverture centrale et dont la grande base est dirigée vers le haut.

Les surfaces pyramidale et conique ont de préférence le même axe. Les angles de la pyramide sont tangents ou extérieurs au cône, celui-ci étant sécant ou tangent à la surface pyramidale; la surface latérale de la cavité peut donc prendre toutes les formes pyramido-conique comprises entre le cône simple (compris) et la pyramide simple (exclue).

L'ouverture centrale de forme générale cylindrique comporte au moins un bourrelet annulaire horizontal interrompu par au moins une échancrure, le diamètre interne du bourrelet étant égal ou légèrement supérieur au diamètre externe du montant correspondant. Ceci permet de solidariser la pièce étoilée au montant, dans le sens longitudinal et en rotation autour de leur axe commun;
– une pièce d'accrochage comportant un manchon de liaison avec une barre (ou traverse) horizontale et un crochet pyramido-conique de forme complémentaire de l'ouverture pyramido-conique des extrémités des bras de l'étoile.

Lorsque l'on désire une liaison angulaire quelconque (en plan), ce crochet est alors purement conique. La partie manchon comporte au moins une gorge annulaire et au moins une partie méplate permettant sa solidarisation rigide respectivement dans le sens longitudinal et en rotation autour de son axe, avec la barre ou traverse correspondante. Dans le cas où les barres ou traverses sont polygonales, la présence de ce méplat est évidemment inutile.

La pièce d'accrochage comporte en plus un dispositif de sécurité contre un démontage accidentel constitué par une bride mobile autour d'un axe horizontal solidaire de la partie supérieure du crochet pyramido-conique et dont la branche inférieure se situe «au repos» au-dessous de l'extrémité du bras de l'étoile.

Pour faciliter la mise en place des barres horizontales ou traverses, les extrémités des bras de la pièce étoilée sont munies d'un chanfrein ou plan incliné faisant avec l'horizontale un angle (α) compris entre 10 et 80°. De ce fait, lors de l'accrochage, la bride tourne naturellement autour de son axe vers l'extérieur, glisse le long de l'extrémité de l'étoile, puis revient sous la branche sous le seul effet de son propre poids, où elle assure alors une liaison indémontable accidentellement.

Le démontage du nœud exige donc le dégagement intentionnel de la bride, par rotation de celle-ci autour de son axe, hors de l'extrémité du bras de l'étoile, dans le logement prévu entre le manchon et le crochet pyramido-conique de la pièce d'accrochage.

La pièce étoilée et la pièce d'accrochage peuvent être réalisées en un matériau adéquat, tel que l'acier, les alliages d'Al, etc...

Cependant, quand les alliages d'Al sont utilisés, il est préférable de placer un insert en acier dans l'axe du crochet pyramido-conique celui-là, dépassant aux deux extrémités, afin de mieux résister aux chocs subis lors de la mise en place et/ou du démontage de l'assemblage.

L'invention sera mieux comprise à l'aide de la description d'un exemple illustré par les figures 1 à 4.

La figure 1 représente, à gauche, une demi-élévation et à droite une demi-coupe axiale selon le plan II–II de la figure 2 d'un nœud d'assemblage selon l'invention.

La figure 2 représente une vue en plan de l'assemblage ci-dessus (montant vertical et barre horizontale exclus).

La figure 3 représente une coupe horizontale du volume pyramido-conique (et ses limites) selon le plan I–I de la figure 1.

La figure 4 représente une coupe axiale d'un crochet pyramido-conique en alliage d'Al contenant un insert en acier.

La pièce étoilée (1) comporte 4 bras comportant chacun à son extrémité une cavité pyramido-conique (2) dont les axes (3) sont parallèles à l'axe (4) de l'ouverture centrale (5) de l'étoile (1). La partie supérieure de chaque bras constitue en chanfrein (25) (ou plan incliné) dont la pente ($\alpha$) par rapport à l'horizontale est de 17°.

L'ouverture centrale 5 de forme générale cylindrique comporte un bourrelet annulaire 6 interrompu par deux échancrures longitudinales 7 dans laquelle s'engage le montant 8.

Dans le cas où le montant 8 n'est pas de forme circulaire, les échancrures 7 peuvent évidemment être omises.

La fixation du montant 8 sur l'ouverture centrale 5 de l'étoile 1 est de préférence réalisée par magnéto-formage, mais peut être également réalisée par expansion mécanique du montant.

La pièce d'accrochage 9 comporte un manchon 10 et un crochet pyramido-conique 11 réunis par un pont supérieur et séparés par un logement inférieur 24.

Le crochet pyramido-conique 11 est constitué par la jonction d'un tronc de cône 12 et d'un tronc de pyramide 13 ayant le même axe, le même sommet et sécants; les angles 14A du tronc de pyramide 13, généralement arrondis, sont donc extérieurs au cône 12.

Le crochet pyramido-conique 11 comporte à sa partie supérieure deux alésages opposés 19 dans lesquels s'engagent les extrémités de la bride de sécurité 14; celle-ci peut donc pivoter autour de l'axe 15 vers le logement 24, pour dégager l'extrémité du bras de l'étoile 1.

Le manchon 10 comporte deux gorges annulaires 16 et un méplat 17 sur lesquels est fixée la barre horizontale 18. Le diamètre hors tout du manchon est égal ou légèrement inférieur au diamètre interne du tube (barre ou traverse).

La fixation de la barre tubulaire 18 sur le manchon 10 se fait de préférence par magnéto-formage, mais peut être également réalisée par rétreint mécanique du tube.

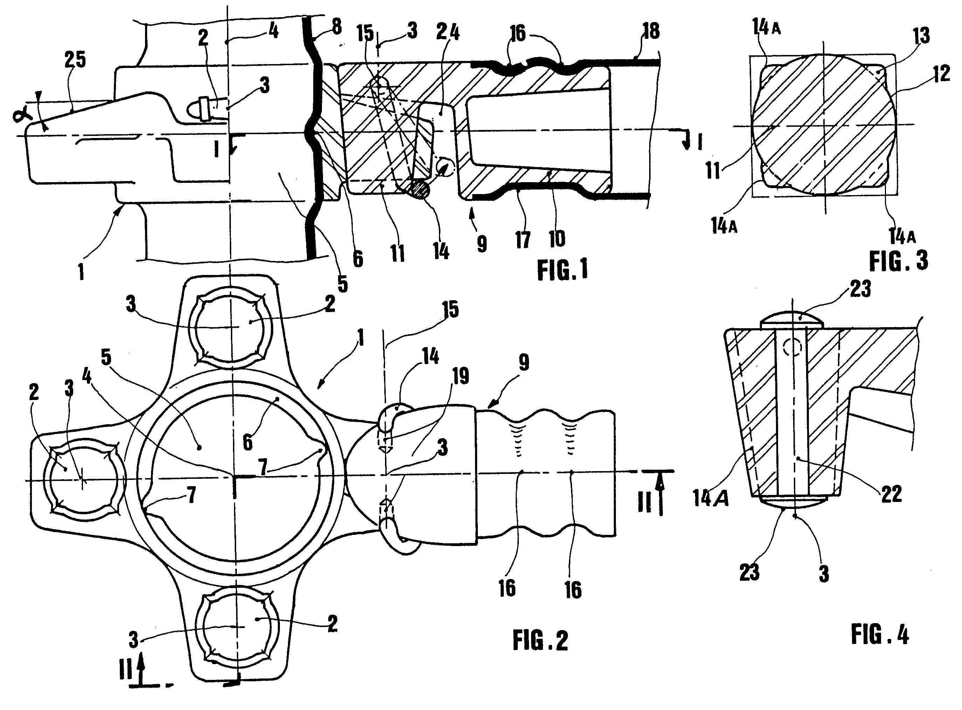

La figure 4 représente le crochet pyramide-conique 11 d'une pièce d'assemblage 9 réalisée en alliage d'Al moulé par exemple en A-S13G sur un insert en acier 22 par exemple en acier inoxydable 18–10 situé dans l'axe 3 du crochet et dépassant aux deux extrémités sous forme de deux têtes (23) bombées.

Le nœud d'assemblage selon l'invention présente sur les dispositifs connus les avantages suivants:
– facilité de montage
– sécurité contre les démontages accidentels Ce dispositif peut également être utilisé pour des structures similaires comme des rayonnages, casiers, présentoirs, supports démontables, podiums, etc...

## Revendications

1. Nœud d'échafaudage comprenant une pièce étoilée et les pièces d'accrochage correspondantes, la pièce étoilée (1) comportant un alésage central (5) dans lequel est fixé un montant vertical (8) ainsi que plusieurs bras présentant à leur extrémité une ouverture (2) dans laquelle s'engage le crochet (11) d'une pièce d'accrochage (9) elle-même fixée à l'extrémité des barres ou traverses (18) horizontales de l'échafaudage, caractérisé en ce que les ouvertures (2) des bras de la pièce étoilée (1) ont une surface latérale pyramido-conique constituée d'une surface pyramidale (13) sécante et extérieure à une surface tronconique (12) et en ce que la surface latérale des crochets (11) des pièces d'accrochage (9) a une forme complémentaire de celle des ouvertures (2).

2. Nœud pour échafaudage comprenant une pièce étoilée et les pièces d'accrochage correspondantes, la pièce étoilée (1) comportant un alésage central (15) dans lequel est fixé un montant vertical (8) ainsi que plusieurs bras présentant à leur extrémité une ouverture (2) dans laquelle s'engage le crochet (11) d'une pièce d'accrochage (9) elle-même fixée à l'extrémité des barres ou traverses (18) horizontales de l'échafaudage, caractérisé en ce que les ouvertures (2) des bras de la pièce étoilée (1) ont une surface latérale pyramido-conique constituée d'une surface pyramidale (13) sécante et extérieure à une surface tronconique (12) et en ce que la surface latérale des crochets (11) des pièces d'accrochage (9) a une forme tronconique complémentaire de celle de la surface tronconique (12) des ouvertures (2).

3. Nœud selon l'une des revendications 1 ou 2, caractérisé en ce que les surfaces conique (12) et pyramidale (13) ont le même axe, parallèle à la direction du montant.

4. Nœud selon l'une des revendications 1 à 3, caractérisé en ce que les surfaces pyramidale (13) et conique (12) ont le même sommet.

5. Nœud selon l'une des revendications 1 à 4, caractérisé en ce que la pièce d'accrochage (9) comporte une bride de sécurité (14) mobile autour d'un axe horizontal (15) situé à sa partie supérieure, et qui s'engage sous l'extrémité du bras de la pièce étoilée (1).

6. Nœud selon l'une des revendications 1 à 4, caractérisé en ce que l'extrémité supérieure de chaque bras comporte un chanfrein (25) ou un plan incliné (25) faisant un angle ($\alpha$) compris entre 10 et 80° avec l'horizontale.

7. Nœud selon l'une des revendications 1 à 6, caractérisé en ce que l'alésage central (5) de la pièce étoilée (1) comporte au moins un bourrelet annulaire interne (6).

8. Nœud selon la revendication 7, caractérisé en ce que ce bourrelet interne (6) comporte au moins une échancrure axiale (7).

9. Nœud selon l'une des revendications 1 à 6, caractérisé en ce que le manchon de liaison (10) de la pièce d'accrochage (9) comporte au moins une gorge circulaire transversale externe (16).

10. Nœud selon la revendication 9, caractérisé en ce que le manchon de la pièce d'accrochage comporte un méplat longitudinal externe (17).

11. Nœud selon l'une des revendications 1 à 9, caractérisé en ce que la pièce d'accrochage, en alliage d'Al, comporte un insert axial (22) dépassant aux deux extrémités (23).

12. Méthode d'assemblage de la pièce étoilée (1) du nœud d'échafaudage selon la revendication 1 ou 2 sur le montant (8) ou de la pièce d'accrochage (9) du nœud d'échafaudage selon la revendication 1 sur une barre ou traverse horizontale (18), caractérisée en ce que l'on utilise le magnétoformage.

13. Méthode d'assemblage de la pièce étoilée (1) du nœud d'echafaudage selon la revendication 1 ou 2 sur le montant (8) ou de la pièce d'accrochage (9) du nœud d'échafaudage selon la revendication 1 sur une barre ou traverse horizontale (18), caractérisée en ce que l'on utilise une expansion ou rétreint mécanique.

## Patentansprüche

1. Gerüstknotenpunkt, aufweisend ein sternartiges Teil und die entsprechenden Kupplungsteile, wobei das sternartige Teil (1) eine zentrale Bohrung (5) umfasst, in der eine vertikale Stütze (8) befestigt ist, sowie mehrere Arme, die an ihrem Ende eine Öffnung (2) aufweisen, in der sich der Haken (11) eines Kupplungsteils (9) in Eingriff befindet, der selbst am Ende der horizontalen Stäbe oder Traversen (18) des Gerüstes befestigt ist, dadurch gekennzeichnet, dass die Öffnungen (2) der Arme des sternartigen Teils (1) eine pyramidkonische Seitenfläche aufweisen, gebildet durch eine schneidende pyramidale Fläche (13) und aussen mit einer kegelstumpfartigen Fläche (12), und dass die Seitenfläche der Haken (11) der Kupplungsteile (9) eine Form komplementär zu derjenigen der Öffnungen (2) aufweist.

2. Knotenpunkt für Gerüst, aufweisend ein sternartiges Teil und die entsprechenden Kupplungsteile, wobei das sternartige Teil (1) eine zentrale Bohrung (5) umfasst, in der eine vertikale Stützte (8) befestigt ist, sowie mehrere Arme, die an ihrem Ende eine Öffnung (2) aufweisen, in der sich der Haken (11) eines Kupplungsteils (9) in Eingriff befindet, das selbst am Ende der horizontalen Stäbe oder Traversen (18) des Gerüstes befestigt ist, dadurch gekennzeichnet, dass die Öffnungen (2) der Arme des sternartigen Teils (1) eine pyramidkonische Seitenfläche aufweisen, gebildet durch eine schneidende pyramidale Fläche (13) und aussen mit einer kegelstumpfartigen Fläche (12), und dass die Seitenfläche der Haken (11) der Kupplungsteile (9) eine Kegelstumpfform komplementär zu derjenigen der kegelstumpfförmigen Fläche (12) der Öffnungen (2) aufweist.

3. Knotenpunkt nach einem der Ansprüche 1 oder 2, dadurch gekennzeichnet, dass die konischen (12) und pyramidalen (13) Flächen dieselbe Achse, parallel zur Richtung der Stütze, aufweisen.

4. Knotenpunkt nach einem der Ansprüche 1 bis 3, dadurch gekennzeichnet, dass die pyramidalen (13) und konischen (12) Flächen denselben Scheitel aufweisen.

5. Knotenpunkt nach einem der Ansprüche 1 bis 4, dadurch gekennzeichnet, dass das Kupplungsteil (9) eine Sicherheitsbügelhalterung (14), beweglich um eine horizontale Achse (15) umfasst, die an ihrem oberen Teil liegt und die sich unter dem Ende des Arms des sternartigen Teils (1) in Eingriff befindet.

6. Knotenpunkt nach einem der Ansprüche 1 bis 4, dadurch gekennzeichnet, dass das obere Ende eines jeden Arms eine Fase (25) oder eine geneigte Ebene (25) umfasst, die einen Winkel ($\alpha$), enthalten zwischen 10 und 80°, mit der Horizontalen bildet.

7. Knotenpunkt nach einem der Ansprüche 1 bis 6, dadurch gekennzeichnet, dass die zentrale Bohrung (5) des sternartigen Teils (1) wenigstens ein inneres ringförmiges Wulstteil (6) umfasst.

8. Knotenpunkt nach Anspruch 7, dadurch gekennzeichnet, dass dieses innere Wulstteil (6) wenigstens eine axiale Aussparung (7) umfasst.

9. Knotenpunkt nach einem der Ansprüche 1 bis 6, dadurch gekennzeichnet, dass der Verbindungsstutzen (10) des Kupplungsteils (9) wenigstens eine äussere, kreisförmige Quernut (16) umfasst.

10. Knotenpunkt nach Anspruch 9, dadurch gekennzeichnet, dass der Stutzen des Kupplungsteils eine äussere Längsabflachung (17) umfasst.

11. Knotenpunkt nach einem der Ansprüche 1 bis 9, dadurch gekennzeichnet, dass das Kupplungsteil, mit Al-Legierung, einen axialen Einsatz (22) umfasst, der an den beiden Enden (23) übersteht.

12. Verfahren zum Zusammenbau des sternartigen Teils (1) des Gerüstknotenpunktes nach Anspruch 1 oder 2, auf der Stütze (8) oder dem Kupplungsteil (9) des Gerüstknotenpunktes nach Anspruch 1, auf einer horizontalen Stange oder Traverse (18), dadurch gekennzeichnet, dass die Magnetformung verwendet wird.

13. Verfahren zum Zusammenbau des sternartigen Teils (1) des Gerüstknotenpunktes nach Anspruch 1 oder 2, auf der Stütze (8) oder dem Kupplungsteil (9) des Gerüstknotenpunktes nach Anspruch 1, auf einer horizontalen Stange oder Traverse (18), dadurch gekennzeichnet, dass eine mechanische Dehnung oder Querschnittverminderung verwendet wird.

## Claims

1. A scaffolding connector comprising a star-shaped portion and the corresponding hooking portions, the star-shaped portion (1) comprising a central bore (5) in which a vertical pole (8) is fixed and a plurality of arms which at their ends have an opening (2) into which engages the hook (11) of a hooking portion (9) which is itself fixed to the ends of the horizontal transverse members or bars (18) of the scaffolding, characterised in that the openings (2) in the arms of the star-shaped portion (1) have a pyramid-conical side surface formed by a pyramidal surface (13) which is in secant and external relationship to a frustoconical surface (12) and that the side surface of the hooks (11) of the hooking portions (9) is of a shape which is complementary to that of the openings (2).

2. A scaffolding connector comprising a star-shaped portion and the corresponding hooking portions, the star-shaped portion (1) comprising a central bore (5) in which a vertical pole (8) is fixed and a plurality of arms which at their ends have an opening (2) into which engages the hook (11) of a hooking portion (9) which is itself fixed to the ends of the horizontal transverse members or bars (18) of the scaffolding, characterised in that the openings (2) in the arms of the star-shaped portion (1) have a pyramid-conical side surface formed by a pyramidal surface (13) which is in secant and external relationship to a frustoconical surface (12) and that the side surface of the hooks (11) of the hooking portions (9) is of a frustoconical shape which is complementary to that of the frustoconical surface (12) of the openings (2).

3. A connector according to one of claims 1 and 2 characterised in that the conical and pyramidal surfaces (12, 13) have the same axis parallel to the direction of the pole.

4. A connector according to one of claims 1 to 3 characterised in that the pyramidal and conical surfaces (13, 12) have the same apex.

5. A connector according to one of claims 1 to 4 characterised in that the hooking portion (9) comprises a safety clip (14) which is movable about a horizontal axis (15) disposed in its upper part and which engages under the end of the arm of the star-shape portion (1).

6. A connector according to one of claims 1 to 4 characterised in that the upper end of each arm comprises a bevel (25) or an inclined surface (25) at an angle ($\alpha$) of between 10 and 80° to the horizontal.

7. A connector according to one of claims 1 to 6 characterised in that the central bore (5) of the star-shaped portion (1) comprises at least one internal annular bead (6).

8. A connector according to claim 7 characterised in that the internal bead (6) comprises at least one axial notch (7).

9. A connector according to one of claims 1 to 6 characterised in that the connecting sleeve (10) of the hooking portion (9) comprises at least one external transverse circular groove (16).

10. A connector according to claim 9 characterised in that the sleeve of the hooking portion comprises an external longitudinal flat (17).

11. A connector according to one of claims 1 to 9 characterised in that the hooking portion of Al alloy comprises an axial insert (22) which projects at the two ends (23).

12. A method of assembling the star-shaped portion (1) of the scaffolding connector according to claim 1 or claim 2 to the pole (8) or the hooking portion (9) of the scaffolding connector according to claim 1 to a horizontal transverse member or bar (18) characterised by using magneto-forming.

13. A method of assembling the star-shaped portion (1) of the scaffolding connector according to claim 1 or claim 2 to the pole (8) or the hooking portion (9) of the scaffolding connector according to claim 1 to a horizontal transverse member or bar (18) characterised by using mechanical hammering or expansion.

FIG.1

FIG. 3

FIG.2

FIG.4

EP 0194215 B1